# EUROPEAN PATENT APPLICATION

(11) **EP 4 763 633 A1**
(43) Date of publication of application: **24.06.2026**
(21) Application number: 24221210.8
(22) Date of filing: 18.12.2024
(51) Int. Cl.: B60R 25/24, G07C 9/00

(54) **A SYSTEM AND METHOD FOR MANAGING A WIRELESS KEY**

(71) Applicant: Zhejiang Zeekr Intelligent Technology Co., Ltd, Ningbo, Zhejiang 315899 (CN); Zhejiang Geely Holding Group Co., Ltd., Hangzhou, Zhejiang 310051 (CN)
(72) Inventor: NILSSON, Magnus, 44836 FLODA (SE); XIA, Johnny, 41308 GÖTEBORG (SE)
(74) Representative: Zacco Sweden AB

(57) **Abstract**

The disclosure relates to a system (100) and method for managing access to a vehicle (1), the method comprises the steps of determining the geographical location of a portable electronic device (30); determining the distance between a vehicle (1) and the portable electronic device (30) and/or determine the relative speed of the portable electronic device (30) in relation to the vehicle (1) and in a determination that the wireless key (10) is within radio coverage of the wireless key control unit (20) of the vehicle (1), and that the distance between the vehicle (1) and the portable electronic device (30) exceeds a predefined distance (L), or that the relative speed of the portable electronic device (30) in relation to the vehicle (1) exceeds a predefined speed limit (V), send a notification to the portable electronic device (30).

## Description

### Technical field

The present disclosure relates to a system and method for managing a wireless key that has been left in the vehicle, and a computer program product.

### Background art

In recent years, the use of wireless keys, also known as key fobs, for vehicle access and ignition has become increasingly prevalent. These wireless keys offer convenience and enhanced security features compared to traditional mechanical keys.

However, they also introduce new challenges, particularly when the wireless key is inadvertently left inside the vehicle.

The user can either forget the key when stepped out of the vehicle or when certain task away from the vehicle took longer time than the user anticipated, resulting in that the key is left in the vehicle or just forgotten in the vehicle.

One problem would be that anyone can open the door to grab the key. It can also lead to various issues, including vehicle lockouts, potential vehicle theft, and inconvenience to the vehicle owner.

### Summary

There is a need for an improved system that can reliably detect when a wireless key has been left inside a vehicle and provide appropriate alerts and actions to prevent lockouts and enhance vehicle security. Today there are several functions in the vehicles that assumes that a wireless key in the vehicle means a user in the vehicle. This disclosure handles situations where that is not true.

It is an object of the present disclosure to mitigate, alleviate or eliminate one or more of the above-identified deficiencies and disadvantages in the prior art and solve at least the above mentioned problem.

According to a first aspect there is provided a system for managing access to a vehicle. The system comprises a wireless key configured to activate the vehicle, a wireless key control unit of the vehicle configured to grant the wireless key access to activate the vehicle, a portable electronic device configured to communicate with the wireless key control unit, and a processing circuitry operatively connected to the vehicle wireless key control unit and the portable electronic device.

The processing circuitry is configured to determine if the wireless key is within radio coverage of the wireless key control unit, determine the geographical location of the vehicle, determine the geographical location of the portable electronic device, determine the distance between the vehicle and the portable electronic device and/or determine the relative speed of the portable electronic device in relation to the vehicle, and in a determination that the wireless key is within radio coverage of the wireless key control unit of the vehicle, and that the distance between the vehicle and the portable electronic device exceeds a predefined distance, or that the relative speed of the portable electronic device in relation to the vehicle exceeds a predefined speed limit, send a notification to the portable electronic device.

An advantage with this first aspect is that the portable electronic device gets a notification of that the wireless key is left in the vehicle when the distance between the vehicle and the portable electronic device exceeds a predefined distance, or when the relative speed of the portable electronic device in relation to the vehicle exceeds a predefined speed limit, and hence a user of the portable electronic device can become aware of that the wireless key is left in the vehicle.

According to some embodiments, the processing circuitry is further configured to notify the user at a first time via a user interface of the portable electronic device, of an option to disable the wireless key, and enable an input interface at a first time, via the user interface of the portable electronic device, indicative of the option to disable the wireless key.

An advantage with this embodiment is that the system allows the user to disable the wireless key in situations where user can't get back to vehicle. Further, disabling the wireless key also prevents theft or stop of an ongoing theft situation to a certain degree.

According to some embodiments, in a determination that no input indicative of the option to disable the wireless key is received via the user interface of the portable electronic device within a predetermined period of time, and the distance between the vehicle and the portable electronic device exceeds the predefined distance, and/or that the relative speed of the portable electronic device in relation to the vehicle exceeds the predefined speed limit, the processing circuitry is configured to notify the user at a second time via the user interface of the portable electronic device, of the option to disable the wireless key, and enable an input interface at a second time, via the user interface of the portable electronic device, indicative of the option to disable the wireless key.

An advantage with this embodiment is that in the case the user ignored disabling the wireless key but the distance between the vehicle and the portable electronic device still exceeds a predefined distance, or when the relative speed of the portable electronic device in relation to the vehicle still exceeds a predefined speed limit, the user can get reminded to disable the wireless key.

According to some embodiments, the processing circuitry is further configured to receive, via the user interface of the portable electronic device, input indicative of the option to disable the wireless key, and disable the wireless key from the possibility to activate the vehicle.

An advantage with this embodiment is that the wireless key can be disabled remotely from the portable electronic device so that the wireless key cannot be used to activate the vehicle.

According to some embodiments, the wireless key, the wireless key control unit and the portable electronic device are securely linked together during an authentication set up process and operatively linked together via a wireless communication network.

An advantage with this embodiment is that the wireless key, the wireless key control unit and the portable electronic device becomes securely linked together to minimize intrusion of any potential intruder device.

According to some embodiments, the wireless key and the wireless key control unit are operatively linked together via a local area wireless communication network and the wireless key control unit and the portable electronic device are operatively linked together via a wide area wireless communication network.

An advantage with this embodiment is that the wireless key and the wireless key control unit can operate within a coverage area with limited radio range to determine presence of the wireless key within the coverage area with limited radio range, while the wireless key control unit and the portable electronic device can operate within a coverage area with a broad radio range to enable e.g. connection via a cellular radio network.

According to some embodiments, wherein the notification to the portable electronic device is indicative of that the wireless key is left in the vehicle, and a user is notified, via a user interface of the portable electronic device, of the notification.

An advantage with this embodiment is that the user of the portable electronic device can get informed about that the wireless key is left in the vehicle.

According to some embodiments the notification to the portable electronic device indicative of that the wireless key is left in the vehicle is an application notification to an application installed on the portable electronic device.

An advantage with this embodiment is that a wide range of portable electronic devices can be used after installing the application, and for instance an application by the vehicle manufacturer or vehicle service provider that used for other purposes can be used.

According to a second aspect there is provided a method for managing access to a vehicle. The method comprising the step of determining if the wireless key is within radio coverage of a wireless key control unit of the vehicle configured to grant the wireless key access to activate the vehicle, the step of determining the geographical location of the vehicle, the step of determining the geographical location of the portable electronic device, the step of determining the distance between the vehicle and the portable electronic device and/or determining the relative speed of the portable electronic device in relation to the vehicle and in a determination that the wireless key is within radio coverage of the wireless key control unit of the vehicle, and that the distance between the vehicle and the portable electronic device exceeds a predefined distance, or that the relative speed of the portable electronic device in relation to the vehicle exceeds a predefined speed limit sending a notification to the portable electronic device.

An advantage with this second aspect is that the portable electronic device gets a notification of that the wireless key is left in the vehicle when the distance between the vehicle and the portable electronic device exceeds a predefined distance, or when the relative speed of the portable electronic device in relation to the vehicle exceeds a predefined speed limit, and hence a user of the portable electronic device can become aware of that the wireless key is left in the vehicle.

According to some embodiments the method further comprises the step of notifying the user at a first time via the user interface of the portable electronic device, of an option to disable the wireless key, and the step of enabling an input interface at a first time, via the user interface of the portable electronic device, indicative of the option to disable the wireless key.

An advantage with this embodiment is that the method allows the user to disable the wireless key in situations where user can't get back to vehicle. Further, disabling the wireless key also prevents theft or stop of an ongoing theft situation to a certain degree.

According to some embodiments, in a determination that no input indicative of the option to disable the wireless key is received via the user interface of the portable electronic device within a predetermined period of time, and the distance between the vehicle and the portable electronic device exceeds the predefined distance, and/or that the relative speed of the portable electronic device in relation to the vehicle exceeds the predefined speed limit, the method further comprises the step of notifying the user at a second time via the user interface of the portable electronic device, of the option to disable the wireless key, and enabling an input interface at a second time, via the user interface of the portable electronic device, indicative of the option to disable the wireless key.

An advantage with this embodiment is that in the case the user ignored disabling the wireless key but the distance between the vehicle and the portable electronic device still exceeds a predefined distance, or when the relative speed of the portable electronic device in relation to the vehicle still exceeds a predefined speed limit, the user can get reminded to disable the wireless key.

According to some embodiments the method comprises the step of receiving, via the user interface of the portable electronic device, input indicative of the option to disable the wireless key, and the step of disabling the wireless key from the possibility to activate the vehicle.

An advantage with this embodiment is that the wireless key can be disabled remotely from the portable electronic device so that the wireless key cannot be used to activate the vehicle.

According to some embodiments, the wireless key, the wireless key control unit and the portable electronic device are securely linked together during an authentication set up process and operatively linked together via a wireless communication network.

An advantage with this embodiment is that the wireless key, the wireless key control unit and the portable electronic device becomes securely linked together to minimize intrusion of any potential intruder device.

According to some embodiments, wherein the wireless key and the wireless key control unit are operatively linked together via a local area wireless communication network and the wireless key control unit and the portable electronic device are operatively linked together via a wide area wireless communication network.

An advantage with this embodiment is that the wireless key and the wireless key control unit can operate within a coverage area with limited radio range to determine presence of the wireless key within the coverage area with limited radio range, while the wireless key control unit and the portable electronic device can operate within a coverage area with a broad radio range to enable e.g. connection via a cellular radio network.

According to some embodiments, wherein the notification to the portable electronic device is indicative of that the wireless key is left in the vehicle, and a user is notified, via a user interface of the portable electronic device, of the notification.

An advantage with this embodiment is that the user of the portable electronic device can get informed about that the wireless key is left in the vehicle.

According to some embodiments the notification to the portable electronic device (30) indicative of that the wireless key is left in the vehicle is an application notification to an application installed on the portable electronic device.

An advantage with this embodiment is that a wide range of portable electronic devices can be used after installing the application, and for instance an application by the vehicle manufacturer or vehicle service provider that used for other purposes can be used.

According to a third aspect there is provided a computer program product comprising a non-transitory computer readable medium, having thereon a computer program comprising program instructions, the computer program being loadable into a processing circuitry and configured to cause execution of the method according to any of the second aspect when the computer program is run by the processing circuitry.

Effects and features of the second and third aspects are to a large extent analogous to those described above in connection with the first aspect. Embodiments mentioned in relation to the first aspect are largely compatible with the second and third aspects.

The present disclosure will become apparent from the detailed description given below. The detailed description and specific examples disclose preferred embodiments of the disclosure by way of illustration only. Those skilled in the art understand from guidance in the detailed description that changes and modifications may be made within the scope of the disclosure.

Hence, it is to be understood that the herein disclosed disclosure is not limited to the particular component parts of the device described or steps of the methods described since such device and method may vary. It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

### Brief descriptions of the drawings

The above objects, as well as additional objects, features and advantages of the present disclosure, will be more fully appreciated by reference to the following illustrative and non-limiting detailed description of example embodiments of the present disclosure, when taken in conjunction with the accompanying drawings.
Figure 1 illustrates a system for managing access to a vehicle according to an embodiment of the present disclosure.
Figure 2a illustrates an example embodiment of the present disclosure when the distance between the vehicle and the portable electronic device exceeds a predefined distance and a notification is sent to the portable electronic device.
Figure 2b illustrates an example embodiment of the present disclosure when the relative speed of the portable electronic device in relation to the vehicle exceeds a predefined speed limit and a notification is sent to the portable electronic device.
Figure 3 illustrates an example embodiment of the present disclosure when the portable electronic device receives input indicative of the option to disable the wireless key, and the wireless key is disabled from the possibility to activate the vehicle.
Figure 4 illustrates a flow chart of the method steps according to the second aspect of the disclosure.
Figure 5 illustrates a computer program product according to the third aspect of the disclosure.

### Detailed description

In recent years, the use of wireless keys, also known as key fobs, for vehicle access and ignition has become increasingly prevalent. These wireless keys offer convenience and enhanced security features compared to traditional mechanical keys. However, they also introduce new challenges, particularly when the wireless key is inadvertently left inside the vehicle.

The user can either forget the key when stepped out of the vehicle or when certain task away from the vehicle took longer time than the user anticipated, resulting in that the key is left in the vehicle or just forgotten in the vehicle.

One problem would be that anyone can open the door to grab the key. It can also lead to various issues, including vehicle lockouts, potential vehicle theft, and inconvenience to the vehicle owner.

There is a need for an improved system that can reliably detect when a wireless key has been left inside a vehicle and provide appropriate alerts and actions to prevent lockouts and enhance vehicle security. Today there are several functions in the vehicles that assumes that a wireless key in the vehicle means a user in the vehicle. This disclosure handles situations where that is not true.

The present disclosure will now be described with reference to the accompanying drawings, in which preferred example embodiments of the disclosure are shown. The disclosure may, however, be embodied in other forms and should not be construed as limited to the herein disclosed embodiments. The disclosed embodiments are provided to fully convey the scope of the disclosure to the skilled person.

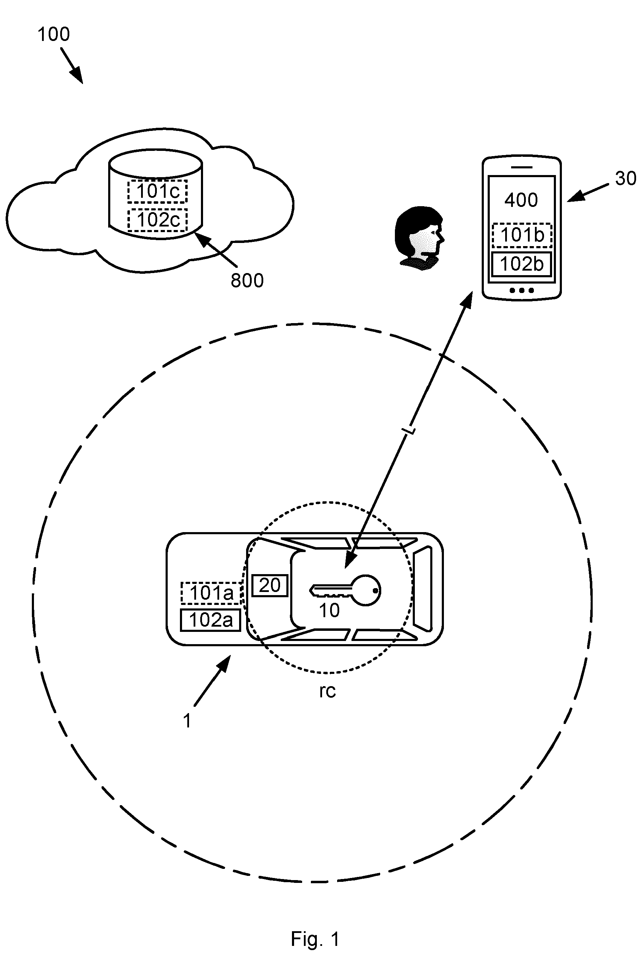

Figure 1 illustrates a system for managing access to a vehicle according to an embodiment of the present disclosure.

The first aspect of this disclosure shows a system 100 for managing access to a vehicle 1. The system 100 comprises a wireless key 10 configured to activate the vehicle 1.

According to some embodiments the wireless key 10 can also be referred to as a digital key, a smart key, a proximity key or a virtual key. According to some embodiments wireless key systems for vehicles can be referred to by several different names, including remote keyless entry system, remote keyless system, or keyless entry system.

The system 100 further comprises a wireless key control unit 20 of the vehicle 1 configured to grant the wireless key 10 access to activate the vehicle 1. According to some embodiments the key control unit 20 is a component of the vehicle 1. According to some embodiments the key control unit 20 is integrated with an on-board vehicle computer. According to some embodiments the key control unit 20 is connected to at least one antenna arranged at the vehicle configured for radio communication.

According to some embodiments the wireless key control unit 20 is configured to determine that a wireless key 10 is within a radio coverage area of the wireless key control unit 20 and hence within a certain distance from the vehicle 1 based on the characteristics of the radio communication interface between the wireless key control unit 20 and the wireless key 10.

The system further comprises a portable electronic device 30 configured to communicate with the wireless key control unit 20. According to some embodiments the portable electronic device 30 is at least any of a smartphone, a tablet, a smartwatch, a portable computer, wireless bracelet, a wireless ring, a headset, a personal digital assistant, and a wearable device. In the Figure 1 the portable electronic device 30 is illustrated as a smartphone operated by a user.

According to some embodiments, the system 100 further comprises a memory 101a,101b,101c configured to store data. According to some embodiments the memory 101a is the memory of an on-board vehicle computer. According to some embodiments the memory 101b is comprised in a portable electronic device 30 connected to the system 100 via a wireless communication network. According to some embodiments the memory 101c is comprised in remote server 800 connected to the system 100 via a wireless communication network.

The system further comprises a processing circuitry 102a,102b,102c. According to some embodiments the processing circuitry 102a is the processing circuitry of an on-board vehicle computer. According to some embodiments the processing circuitry 102b is comprised in a portable electronic device 30 connected to the system 100 via a wireless communication network. According to some embodiments the processing circuitry 102c is comprised in a remote server 800 connected to the system 100 via a wireless communication network.

The processing circuitry 102a,102b,102c is operatively connected to the vehicle wireless key control unit 20 and the portable electronic device 30.

The processing circuitry 102a,102b,102c is configured to determine if the wireless key 10 is within radio coverage rc of the wireless key control unit 20. An example radio coverage rc of the wireless key control unit 20 is illustrated in Figure 1.

The processing circuitry 102a,102b,102c is configured to determine the geographical location of the vehicle 1. According to some embodiments the processing circuitry 102a,102b,102c is operatively connected to a global positioning system device of the vehicle 1 configured to determine the geographical location of the vehicle 1.

The processing circuitry 102a,102b,102c is configured to determine the geographical location of the portable electronic device 30. According to some embodiments the processing circuitry 102a,102b,102c is operatively connected to a global positioning system device of the portable electronic device 30 configured to determine the geographical location of the portable electronic device 30.

The global positioning system may for example be any of GPS (Global Positioning System), Galileo, BeiDou, QZSS (Quasi-Zenith Satellite System) or IRNSS (Indian Regional Navigation Satellite System).

The processing circuitry 102a,102b,102c is configured to determine the distance between the vehicle 1 and the portable electronic device 30 and/or determine the relative speed of the portable electronic device 30 in relation to the vehicle 1.

According to some embodiments the distance between the vehicle 1 and the portable electronic device 30 is determined based on the geographical location of the vehicle 1 and the geographical location of the portable electronic device 30. According to some embodiments the distance between the vehicle 1 and the portable electronic device 30 is constantly determined at a certain time interval. In an example use case, the user of the portable electronic device 30 is walking away from the vehicle 1 and the distance is determined every second.

According to some embodiments the relative speed of the portable electronic device 30 in relation to the vehicle 1 is determined based the on geographical location of the vehicle 1 and the change of the geographical location of the portable electronic device 30 over time. According to some embodiments the relative speed of the portable electronic device 30 in relation to the vehicle 1 is constantly determined at a certain time interval. In an example use case the user of the portable electronic device 30 is running away from the vehicle 1 and the relative speed is determined every second, as a function of the distance between the vehicle 1 and the portable electronic device 30.

In a determination that the wireless key 10 is within radio coverage rc of the wireless key control unit 20 of the vehicle 1, and that the distance between the vehicle 1 and the portable electronic device 30 exceeds a predefined distance L, or that the relative speed of the portable electronic device 30 in relation to the vehicle 1 exceeds a predefined speed limit V the processing circuitry 102a,102b,102c is configured to send a notification to the portable electronic device 30.

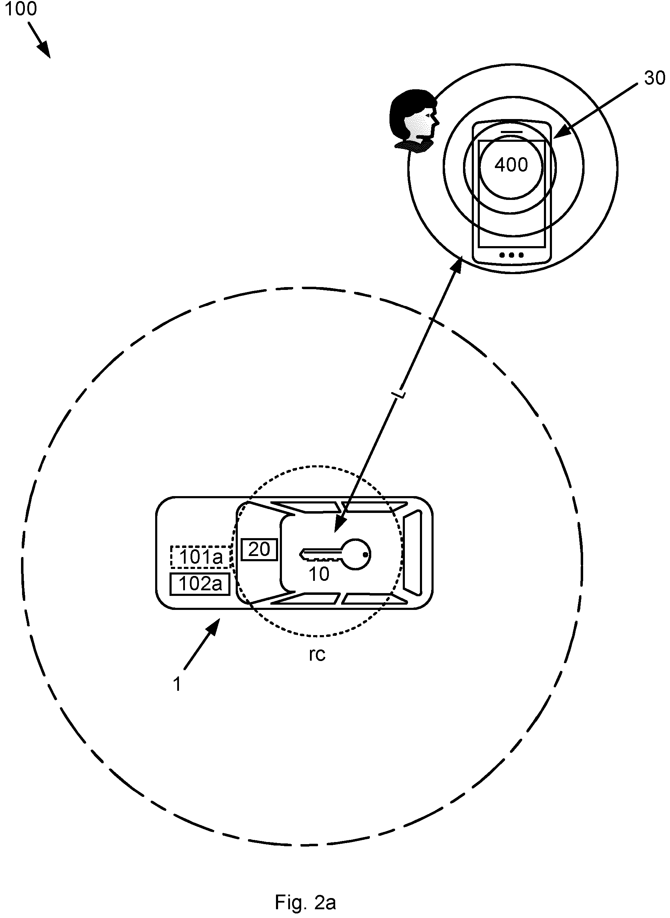

Figure 2a illustrates an example embodiment of the present disclosure when the distance between the vehicle 1 and the portable electronic device 30 exceeds a predefined distance L and a notification is sent to the portable electronic device 30.

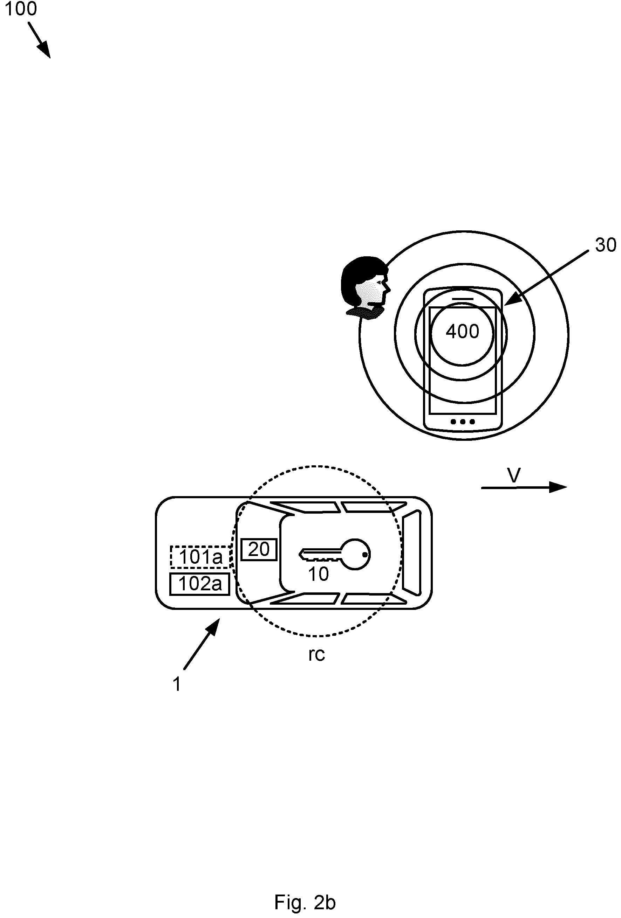

Figure 2b illustrates an example embodiment of the present disclosure when the relative speed V of the portable electronic device 30 in relation to the vehicle 1 exceeds a predefined speed limit and a notification is sent to the portable electronic device 30.

An advantage with this first aspect is that the portable electronic device 30 gets a notification of that the wireless key 10 is left in the vehicle 1 when the distance between the vehicle 1 and the portable electronic device 30 exceeds a predefined distance, or when the relative speed of the portable electronic device 30 in relation to the vehicle 1 exceeds a predefined speed limit, and hence a user of the portable electronic device 30 can become aware of that the wireless key is left in the vehicle.

According to some embodiments the processing circuitry 102a,102b,102c is configured to determine if the vehicle 1 is turned off, or inactivated, before initiating determination if the wireless key 10 is within radio coverage of the wireless key control unit 20.

According to some embodiments the processing circuitry 102a,102b,102c is configured to determine if the vehicle 1 has been turned off, or has been inactivated, for a predetermined period of time before initiating determination if the wireless key 10 is within radio coverage of the wireless key control unit 20.

According to some embodiments the processing circuitry 102a,102b,102c is configured to determine if the vehicle 1 is about to enter sleep mode, before initiating determination if the wireless key 10 is within radio coverage of the wireless key control unit 20.

According to some embodiments the processing circuitry 102a,102b,102c is configured to determine if the vehicle 1 is about to enter sleep mode within a predetermined period of time before initiating determination if the wireless key 10 is within radio coverage of the wireless key control unit 20.

According to some embodiments the processing circuitry 102a,102b,102c is configured to constantly determine if the wireless key 10 is within radio coverage of the wireless key control unit 20.

According to some embodiments the processing circuitry 102a,102b,102c is configured to constantly determine if the wireless key 10 is within radio coverage of the wireless key control unit 20 after the vehicle has been turned, on or activated, until a predetermined time has lapsed after the vehicle has been turned off, or inactivated.

According to some embodiments the processing circuitry 102a,102b,102c is further configured to notify the user at a first time via the user interface 400 of the portable electronic device 30, of an option to disable the wireless key 10, and enable an input interface at a first time, via the user interface 400 of the portable electronic device 30, indicative of the option to disable the wireless key 10.

Both Figures 2a and 2b illustrate the portable electronic device 30 receiving a notification via the user interface 400 of the portable electronic device 30.

According to some embodiments via the user interface 400 is a Graphical User Interface (GUI) with visual elements like icons, buttons, and menus that the user can interact with through e.g. a touch sensitive display, a touchscreen or other input interface.

According to some embodiments via the user interface 400 is a Voice User Interface (VUI) that allow the user to interact through voice commands.

In an example use case, a user is notified via output information via the user interface 400 of the portable electronic device 30 that the "wireless key is left in the vehicle", and the option to "DISABLE KEY" with the options to respond with the input "YES" or "NO" via the user interface 400.

An advantage with this embodiment is that the system 100 allows the user to disable the wireless key 10 in situations where user can't get back to vehicle 1. Further, disabling the wireless key 10 also prevents theft or stop of an ongoing theft situation to a certain degree.

According to some embodiments in a determination that no input indicative of the option to disable the wireless key 10 is received via the user interface 400 of the portable electronic device 30 within a predetermined period of time t1, and the distance between the vehicle 1 and the portable electronic device 30 exceeds the predefined distance L, and/or that the relative speed of the portable electronic device 30 in relation to the vehicle 1 exceeds the predefined speed limit, the processing circuitry 102a,102b,102c is configured to notify the user at a second time via the user interface 400 of the portable electronic device 30, of the option to disable the wireless key 10, and enable an input interface at a second time, via the user interface 400 of the portable electronic device 30, indicative of the option to disable the wireless key 10.

In an example use case the user may choose to ignore the notification via the user interface 400 of the portable electronic device 30, e.g. when the user knows that the user will soon be back at the vehicle 1. However, in the event that something unexpected occurs, the user will get a second reminder after the predetermined period of time t1, and get a second chance to input via the user interface 400 of the portable electronic device 30, information indicative of the option to disable the wireless key 10.

An advantage with this embodiment is that in the case the user ignored disabling the wireless key 10 but the distance between the vehicle 1 and the portable electronic device 30 still exceeds a predefined distance, or when the relative speed of the portable electronic device 30 in relation to the vehicle 1 still exceeds a predefined speed limit, the user can get reminded to disable the wireless key.

Another advantage with this aspect is that the first time the user got notified can be seen as a heads up for the user, and the user may be comfortable with that the key is left in the vehicle some more time, while the second time can be seen as the time to act since after the predetermined period of time t1 the risk of various issues, including vehicle lockouts, potential vehicle theft may be greater that after the first time the user got notified.

According to some embodiments the processing circuitry 102a,102b,102c is further configured to receive, via the user interface 400 of the portable electronic device 30, input indicative of the option to disable the wireless key 10, and disable the wireless key 10 from the possibility to activate the vehicle 1.

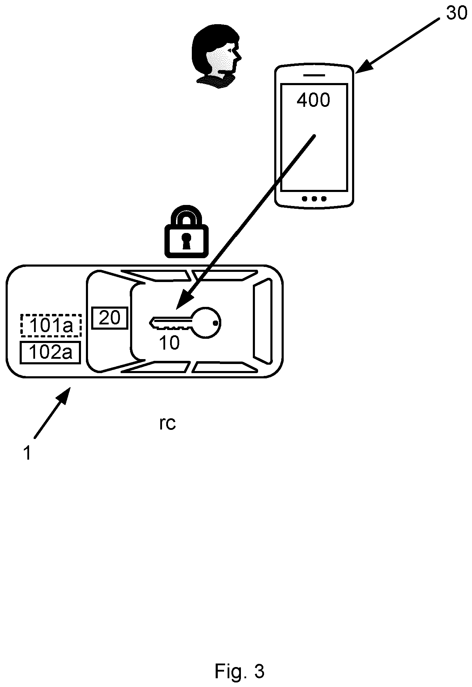

Figure 3 illustrates an example embodiment of the present disclosure when the portable electronic device 30 receives input via the user interface 400 indicative of the option to disable the wireless key 10, and the wireless key 10 is disabled from the possibility to activate the vehicle, which is illustrated with the lock symbol in Figure 3.

According to some embodiments the wireless key control unit 20 of the vehicle 1, disables the wireless key 10 to activate the vehicle 1.

An advantage with this embodiment is that the wireless key 10 can be disabled remotely from the portable electronic device 30 so that the wireless key 10 cannot be used to activate the vehicle 1.

According to some embodiments the wireless key 10, the wireless key control unit 20 and the portable electronic device 30 are securely linked together during an authentication set up process and operatively linked together via a wireless communication network.

In an example embodiment the user uses an application, e.g. by the original equipment manufacturer, the vehicle brand, or by a vehicle sharing service company that is installed on the portable electronic device 30. According to some embodiments a secure link between the wireless key 10, the wireless key control unit 20 and the portable electronic device 30 can be established when the wireless key 10, the wireless key control unit 20 and the portable electronic device 30 are all with the installed application are within radio coverage rc of a wireless key control unit 20 of the vehicle 1. In an example this secure link is established once, and after that the wireless key 10, the wireless key control unit 20 and the portable electronic device 30 are configured to operate in the system 100.

An advantage with this embodiment is that the wireless key 10, the wireless key control unit 20 and the portable electronic device 30 becomes securely linked together to minimize intrusion of any potential intruder device.

According to some embodiments the wireless key 10 and the wireless key control unit 20 are operatively linked together via a local area wireless communication network and the wireless key control unit 20 and the portable electronic device 30 are operatively linked together via a wide area wireless communication network.

According to some embodiments the local area wireless communication network is a standardized wireless local area network such as a Wireless Local Area Network, WLAN, Bluetooth^{™}, ZigBee, Ultra-Wideband, Near Field Communication, NFC, Radio Frequency Identification, RFID, or similar network.

According to some embodiments the wide area wireless communication network is a Global System for Mobile Communications, GSM, Extended GSM, General Packet Radio Service, GPRS, Enhanced Data Rates for GSM Evolution, EDGE, Wideband Code Division Multiple Access, WCDMA, Long Term Evolution, LTE, Narrowband-loT, 5G, Worldwide Interoperability for Microwave Access, WiMAX or Ultra Mobile Broadband, UMB or similar network

An advantage with this embodiment is that the wireless key 10 and the wireless key control unit 20 can operate within a coverage area with limited radio range to determine presence of the wireless key 10 within the coverage area with limited radio range defined by the characteristics of the radio wave propagation of the local area wireless communication network, while the wireless key control unit 20 and the portable electronic device 30 can operate within a coverage area with a broad radio range to enable e.g. connection via a cellular radio network so that the portable electronic device 30 can be in connection with the wireless key control unit 20 even when the portable electronic device 30 is far away from the vehicle 1.

According to some embodiments the notification to the portable electronic device 30 is indicative of that the wireless key 10 is left in the vehicle 1, and a user is notified, via a user interface 400 of the portable electronic device 30, of the notification.

An advantage with this embodiment is that the user of the portable electronic device 30 can get informed about that the wireless key 10 is left in the vehicle 1.

The second aspect of this disclosure shows a method for managing access to a vehicle.

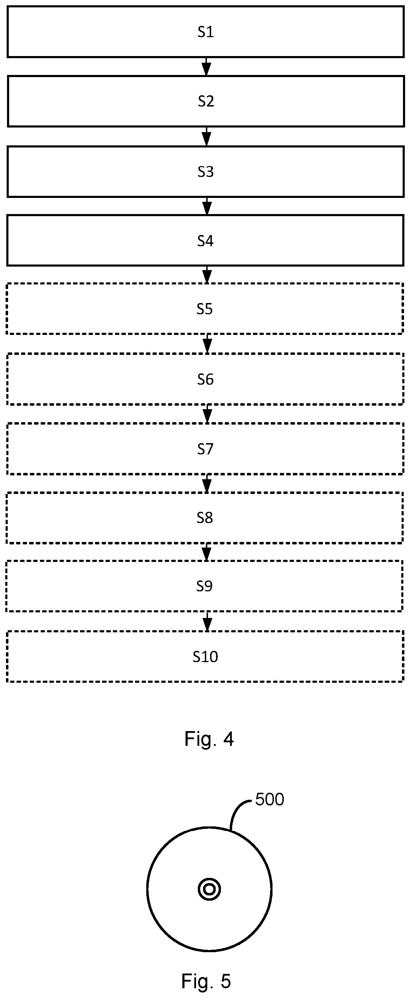

Figure 4 illustrates a flow chart of the method steps according to the second aspect of the disclosure.

The method comprising the step of S1 determining if the wireless key 10 is within radio coverage rc of a wireless key control unit 20 of the vehicle 1 configured to grant the wireless key 10 access to activate the vehicle 1, the step of S2 determining the geographical location of the vehicle 1, the step of S3 determining the geographical location of the portable electronic device 30, the step of S4 determining the distance between the vehicle 1 and the portable electronic device 30 and/or determining the relative speed of the portable electronic device 30 in relation to the vehicle 1 and in a determination that the wireless key 10 is within radio coverage rc of the wireless key control unit 20 of the vehicle 1, and that the distance between the vehicle 1 and the portable electronic device 30 exceeds a predefined distance L, or that the relative speed of the portable electronic device 30 in relation to the vehicle 1 exceeds a predefined speed limit V: sending a notification to the portable electronic device.

An advantage with this second aspect is that the portable electronic device 30 gets a notification of that the wireless key 10 is left in the vehicle 1 when the distance between the vehicle 1 and the portable electronic device 30 exceeds a predefined distance, or when the relative speed of the portable electronic device 30 in relation to the vehicle exceeds a predefined speed limit, and hence a user of the portable electronic device can become aware of that the wireless key is left in the vehicle.

According to some embodiments the method further comprises the step of S5 notifying the user at a first time via the user interface 400 of the portable electronic device 30, of an option to disable the wireless key 10, and the step of S6 enabling an input interface at a first time, via the user interface 400 of the portable electronic device 30, indicative of the option to disable the wireless key 10.

An advantage with this embodiment is that the method allows the user to disable the wireless key 10 in situations where user can't get back to vehicle 1. Further, disabling the wireless key 10 also prevents theft or stop of an ongoing theft situation to a certain degree.

According to some embodiments, in a determination that no input indicative of the option to disable the wireless key 10 is received via the user interface 400 of the portable electronic device 30 within a predetermined period of time t1, and the distance between the vehicle 1 and the portable electronic device 30 exceeds the predefined distance L, and/or that the relative speed of the portable electronic device 30 in relation to the vehicle 1 exceeds the predefined speed limit, the method further comprises the step of S7 notifying the user at a second time via the user interface 400 of the portable electronic device 30, of the option to disable the wireless key 10; and the step of S8 enabling an input interface at a second time, via the user interface 400 of the portable electronic device 30, indicative of the option to disable the wireless key 10.

An advantage with this embodiment is that in the case the user ignored disabling the wireless key 10 but the distance between the vehicle 1 and the portable electronic device 30 still exceeds a predefined distance, or when the relative speed of the portable electronic device 30 in relation to the vehicle 1 still exceeds a predefined speed limit, the user can get reminded to disable the wireless key 10.

According to some embodiments, the method further comprises the step of S9 receiving, via the user interface 400 of the portable electronic device 30, input indicative of the option to disable the wireless key 10, and the step of S10 disabling the wireless key 10 from the possibility to activate the vehicle 1.

An advantage with this embodiment is that the wireless key 10 can be disabled remotely from the portable electronic device 30 so that the wireless key 10 cannot be used to activate the vehicle 1.

According to some embodiments the wireless key 10, the wireless key control unit 20 and the portable electronic device 30 are securely linked together during an authentication set up process and operatively linked together via a wireless communication network.

An advantage with this embodiment is that the wireless key 10, the wireless key control unit 20 and the portable electronic device 30 become securely linked together to minimize intrusion of any potential intruder device.

According to some embodiments the wireless key 10 and the wireless key control unit 20 are operatively linked together via a local area wireless communication network and the wireless key control unit 20 and the portable electronic device 30 are operatively linked together via a wide area wireless communication network.

An advantage with this embodiment is that the wireless key 10 and the wireless key control unit 20 can operate within a coverage area with limited radio range to determine presence of the wireless key 10 within the coverage area with limited radio range defined by the characteristics of the radio wave propagation of the local area wireless communication network, while the wireless key control unit 20 and the portable electronic device 30 can operate within a coverage area with a broad radio range to enable e.g. connection via a cellular radio network so that the portable electronic device 30 can be in connection with the wireless key control unit 20 even when the portable electronic device 30 is far away from the vehicle 1.

According to some embodiments the notification to the portable electronic device 30 is indicative of that the wireless key 10 is left in the vehicle 1, and a user is notified, via a user interface 400 of the portable electronic device 30, of the notification.

An advantage with this embodiment is that the user of the portable electronic device can get informed about that the wireless key is left in the vehicle.

The third aspect of this disclosure shows a computer program product the second aspect comprising a non-transitory computer readable medium, having thereon a computer program comprising program instructions, the computer program being loadable into a processing circuitry 102a,102b,102c and configured to cause execution of the method according to the second aspect when the computer program is run by the processing circuitry 102a,102b,102c.

The person skilled in the art realizes that the present disclosure is not limited to the preferred embodiments described above. The person skilled in the art further realizes that modifications and variations are possible within the scope of the appended claims. Additionally, variations to the disclosed embodiments can be understood and effected by the skilled person in practicing the claimed disclosure, from a study of the drawings, the disclosure, and the appended claims.

## Claims

1. A system (100) for managing access to a vehicle (1), the system (100) comprises:
a wireless key (10) configured to activate the vehicle (1);
a wireless key control unit (20) of the vehicle (1) configured to grant the wireless key (10) access to activate the vehicle (1);
a portable electronic device (30) configured to communicate with the wireless key control unit (20); and
a processing circuitry (102a,102b,102c) operatively connected to the vehicle wireless key control unit (20) and the portable electronic device (30) configured to:
- determine if the wireless key (10) is within radio coverage of the wireless key control unit (20);
- determine the geographical location of the vehicle (1);
- determine the geographical location of the portable electronic device (30);
- determine the distance between the vehicle (1) and the portable electronic device (30) and/or determine the relative speed of the portable electronic device (30) in relation to the vehicle (1)
and in a determination that the wireless key (10) is within radio coverage of the wireless key control unit (20) of the vehicle (1), and that the distance between the vehicle (1) and the portable electronic device (30) exceeds a predefined distance (L), or that the relative speed of the portable electronic device (30) in relation to the vehicle (1) exceeds a predefined speed limit (V):
- send a notification to the portable electronic device (30).

2. The system (100) according to claim 1, wherein the processing circuitry (102a,102b,102c) is further configured to:
- notify the user at a first time via the user interface (400) of the portable electronic device (30), of an option to disable the wireless key (10); and
- enable an input interface at a first time, via the user interface (400) of the portable electronic device (30), indicative of the option to disable the wireless key (10).

3. The system (100) according to claim 2, wherein in a determination that no input indicative of the option to disable the wireless key (10) is received via the user interface (400) of the portable electronic device (30) within a predetermined period of time (t1), and the distance between the vehicle (1) and the portable electronic device (30) exceeds the predefined distance (L), and/or that the relative speed of the portable electronic device (30) in relation to the vehicle (1) exceeds the predefined speed limit, the processing circuitry (102a,102b,102c) is configured to:
- notify the user at a second time via the user interface (400) of the portable electronic device (30), of the option to disable the wireless key (10); and
- enable an input interface at a second time, via the user interface (400) of the portable electronic device (30), indicative of the option to disable the wireless key (10).

4. The system (100) according to any preceding claims, wherein the processing circuitry (102a,102b,102c) is further configured to:
- receive, via the user interface (400) of the portable electronic device (30), input indicative of the option to disable the wireless key (10); and
- disable the wireless key (10) from the possibility to activate the vehicle (1).

5. The system (100) according to any of the preceding claims, wherein the wireless key (10), the wireless key control unit (20) and the portable electronic device (30) are securely linked together during an authentication set up process and operatively linked together via a wireless communication network.

6. The system (100) according to any of the preceding claims, wherein the wireless key (10) and the wireless key control unit (20) are operatively linked together via a local area wireless communication network and the wireless key control unit (20) and the portable electronic device (30) are operatively linked together via a wide area wireless communication network.

7. The system (100) according to any preceding claims wherein the notification to the portable electronic device (30) is indicative of that the wireless key (10) is left in the vehicle (1), and a user is notified, via a user interface (400) of the portable electronic device (30), of the notification.

8. A method for managing access to a vehicle (1), the method comprising:
- (S1) determining if a wireless key (10) is within radio coverage of a wireless key control unit (20) of the vehicle (1) configured to grant the wireless key (10) access to activate the vehicle (1);
- (S2) determining the geographical location of the vehicle (1);
- (S3) determining the geographical location of the portable electronic device (30);
- (S4) determining the distance between the vehicle (1) and the portable electronic device (30) and/or determining the relative speed of the portable electronic device (30) in relation to the vehicle (1) and in a determination that the wireless key (10) is within radio coverage of the wireless key control unit (20) of the vehicle (1), and that the distance between the vehicle (1) and the portable electronic device (30) exceeds a predefined distance (L), or that the relative speed of the portable electronic device (30) in relation to the vehicle (1) exceeds a predefined speed limit (V):
- sending a notification to the portable electronic device.

9. The method according to according to claim 8 further comprising:
- (S5) notifying the user at a first time via the user interface (400) of the portable electronic device (30), of an option to disable the wireless key (10); and
- (S6) enabling an input interface at a first time, via the user interface (400) of the portable electronic device (30), indicative of the option to disable the wireless key (10).

10. The method according to claim 9 wherein in a determination that no input indicative of the option to disable the wireless key (10) is received via the user interface (400) of the portable electronic device (30) within a predetermined period of time (t1), and the distance between the vehicle (1) and the portable electronic device (30) exceeds the predefined distance (L), and/or that the relative speed of the portable electronic device (30) in relation to the vehicle (1) exceeds the predefined speed limit, the method further comprising:
- (S7) notifying the user at a second time via the user interface (400) of the portable electronic device (30), of the option to disable the wireless key (10); and
- (S8) enabling an input interface at a second time, via the user interface (400) of the portable electronic device (30), indicative of the option to disable the wireless key (10).

11. The method according to any of the claims 8-10 further comprising:
- (S9) receiving, via the user interface (400) of the portable electronic device (30), input indicative of the option to disable the wireless key (10); and
- (S10) disabling the wireless key (10) from the possibility to activate the vehicle (1).

12. The method according to any of the claims 8-11 wherein the wireless key (10), the wireless key control unit (20) and the portable electronic device (30) are securely linked together during an authentication set up process and operatively linked together via a wireless communication network.

13. The method according to any of the claims 8-12 wherein the wireless key (10) and the wireless key control unit (20) are operatively linked together via a local area wireless communication network and the wireless key control unit (20) and the portable electronic device (30) are operatively linked together via a wide area wireless communication network.

14. The method according to any of the claims 8-13 wherein the notification to the portable electronic device (30) is indicative of that the wireless key (10) is left in the vehicle (1), and a user is notified, via a user interface (400) of the portable electronic device (30), of the notification.

15. A computer program product (500) comprising a non-transitory computer readable medium, having thereon a computer program comprising program instructions, the computer program being loadable into a processing circuitry (102a,102b,102c) and configured to cause execution of the method according to any of claims 8 through 14 when the computer program is run by the processing circuitry (102a,102b,102c).
